## Europäisches Patentamt
## European Patent Office
## Office européen des brevets

(19)

(11) Numéro de publication: **0 091 630**
**B1**

(12)

# FASCICULE DE BREVET EUROPÉEN

(45) Date de publication du fascicule du brevet:
**23.07.86**

(51) Int. Cl.⁴: **H 04 M 1/274**

(21) Numéro de dépôt: **83103274.3**

(22) Date de dépôt: **05.04.83**

(54) **Dispositif de prise de ligne sans décrochage pour poste téléphonique comportant un microprocesseur.**

(30) Priorité: **09.04.82 FR 8206243**

(43) Date de publication de la demande:
**19.10.83 Bulletin 83/42**

(45) Mention de la délivrance du brevet:
**23.07.86 Bulletin 86/30**

(84) Etats contractants désignés:
**BE DE FR GB IT NL SE**

(56) Documents cité:
**US-A-4 220 820**
**US-A-4 277 651**

**FUNKSCHAU, no. 2, janvier 1982, pages 45-47, Munich, DE., E. WILKE et al.: "Ein Telefon mit Komfort"**

(73) Titulaire: **LA TELEPHONIE INDUSTRIELLE ET COMMERCIALE TELIC ALCATEL Société Anonyme dite:, 206 Route de Colmar, F-67023 Strasbourg Cedex (FR)**

(72) Inventeur: **Bitsch, Philippe, c/o TELIC ALCATEL 206 route de Colmar, F-67023 Strasbourg Cedex (FR)**

(74) Mandataire: **Weinmiller, Jürgen, Zeppelinstrasse 63, D-8000 München 80 (DE)**

EP 0 091 630 B1

## Description

La présente invention a pour objet un dispositif de prise de ligne par fermeture de boucle sans décrochage du combiné hors du crochet commutateur pour poste téléphonique comportant un microprocesseur.

Usuellement, l'utilisateur d'un poste téléphonique assure la prise de la ligne téléphonique qui dessert ce poste par le simple fait de décrocher le combiné de ce poste. Cette opération de décrochage occasionne la fermeture de contacts qui referment la boucle alimentée par le central téléphonique de rattachement du poste et constituée par les deux fils de conversation qui relient ce poste au central. La fermeture de boucle déclenche le passage d'un courant à travers la ligne, avec pour conséquence la suppression de la possibilité d'appel de ce poste par d'autres postes et la réservation d'un accès aux organes de traitement d'appel du central de rattachement en vue de satisfaire aux besoins de l'usager appelant.

La mise en oeuvre de postes téléphoniques offrant des possibilités d'exploitation plus étendues qui ceux des simples postes et en particulier la mise en oeuvre de postes aptes à mémoriser des informations accessibles avec une procédure simplifiée, par exemple pour permettre d'appeler certains correspondants par une procédure de numérotation abrégée, ou de postes du type terminaux d'annuaire, conduit à l'emploi de circuits électroniques et en particulier de microprocesseurs dont l'alimentation doit être assurée préalablement à l'utilisation du poste qui les comporte, éventuellement sans nécessité de mise en oeuvre du combiné.

Or aucun courant ne circule normalement sur une ligne téléphonique tant qu'elle n'est pas bouclée au niveau du poste téléphonique qu'elle dessert.

La solution la plus simple consiste donc à décrocher le combiné du poste téléphonique, même si l'usage du combiné n'est pas nécessaire. Toutefois cette solution présente un certain nombre d'inconvénients, car, en l'absence de précautions spéciales le microphone du combiné capte le bruit ambiant et le transmet sur la liaison établie, à partir du moment au le combiné est décroché. De plus les risques de non raccrochage du combiné et donc d'indisponibilité de la ligne pour un appel de tiers après la fin d'une communication sont beaucoup plus grands à partir du moment où le combiné a été décroché mais n'a pas été utilisé pour un échange verbal.

Le document US—A—4277651 prévoit un dispositif de prise de ligne par fermeture de boucle sans décrochage du combiné, hors du crochet commutateur, pour poste téléphonique comportant un microprocesseur associé à une pluralité de circuits électroniques auxiliaires et alimenté en courant continu, ainsi que ces circuits, par l'intermédiaire de la ligne téléphonique, le microprocesseur contrôlant la prise de ligne téléphonique ou fermeture de boucle, entraînée par l'actionnement d'une touche de prise et d'un relais.

Or, l'ouverture de boucle, notamment en fin de prise, occasionne une forte surintensité due à l'inductance de la ligne et des risques de soudure des lames du contact de relais qui assurent l'ouverture et la fermeture de boucle.

La présente invention propose donc un dispositif de prise de ligne téléphonique par fermeture de boucle sans décrochage du combiné, hors du crochet commutateur, pour poste téléphonique comportant un microprocesseur associé à une pluralité de circuits électroniques auxiliaires et alimenté en courant continue, ainsi que ces circuits par l'intermédiaire de la ligne, téléphonique via un pont de diodes, fixant le sens de circulation du courant continu dans le poste quelle que soit la polarité des fils de ligne téléphonique, et via un réseau d'alimentation, situé en aval du point de diodes par rapport à la ligne téléphonique, ledit microprocesseur commandant un relais pour assurer la prise de ligne par fermeture de boucle, suite à l'actionnement d'une touche de prise.

L'invention est caractérisée en ce que le dispositif de prise comporte un transistor interrupteur, commandé par le microprocesseur et interposé en extrémité dun fil commun de retour du réseau d'alimentation, pour protéger un contact du relais, lors des ouvertures de boucle, contact qui est placé en parallèle avec un contact de la touche et un contact du crochet commutateur sur un fil de ligne, en amont du pont de diodes, ledit transistor interrompant la boucle, qui relie les fils de ligne via le réseau d'alimentation à travers le poste, préalablement à toute ouverture du contact du relais.

L'invention sera décrite ci-après plus en détail à l'aide d'un exemple de mise en oeuvre en relation avec les figures ci-dessous énumérées.

La figure 1 présente un schéma de principe d'un poste téléphonique à microprocesseur qui est équipé d'un dispositif de prise de ligne sans décrochage du combiné selon l'invention.

Les figures 2A et 2B représentent un exemple de réalisation des éléments du dispositif de prise selon l'invention et des circuits du poste associés à sont fonctionnement.

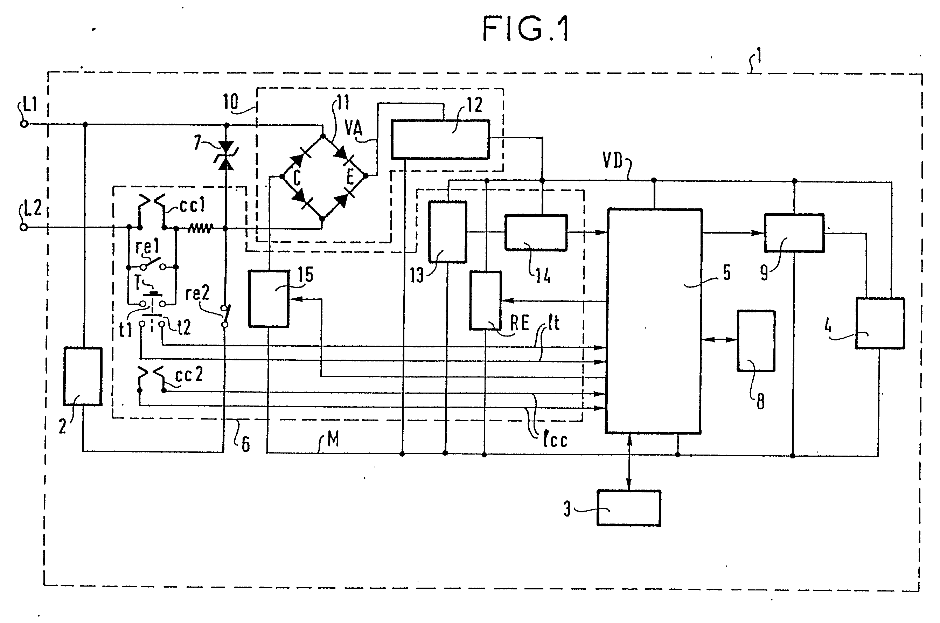

Le poste téléphonique 1 présenté figure 1 est classiquement alimenté par un central téléphonique de rattachement via deux fils de ligne L1 et L2 aptes à l'alimenter en courant continu et à assurer les communications entre ce poste téléphonique et d'autres postes via le central auquel il est rattaché.

Ce poste téléphonique 1 comporte essentiellement un équipement 2 lui permettant de signaler les demandes de mise en communication effectuées par les autres postes, un équipement 3 permettant à un utilisateur de demander l'établissement d'une communication vers un autre poste et d'effectuer des manoeuvres d'exploitation, un équipement 4 assurant la conversion bijective des signaux reçues via les fils de ligne L1 et L2 en informations exploitables par l'utilisateur, homme ou machine, et des informations en signaux transmissibles via ces fils de ligne.

Une logique organisée autour d'un microprocesseur 5 à l'aide d'une pluralité de circuits auxiliaires assure la coordination des opérations d'exploitation du poste, au moins sur le plan téléphonique.

Un dispositif de prise de ligne 6, qui constitue l'un des circuits auxiliaires évoqués plus haut, permet de réserver la ligne au profit d'un utilisateur du poste en vue d'un appel à destination d'un autre poste via les fils de ligne L1, L2.

L'équipement 4, traditionnellement appelé circuit audio, comporte classiquement un combiné non figuré, composé d'un microphone et d'au moins un écouter ainsi qú'éventuellement un haut-parleur non figuré permettant une écoute simultanée par plusieurs auditeurs et un modem, non figuré, par la transmission de données par exemple pour l'affichage d'informations sur un équipement de visualisation. L'équipement 4 reçoit et émet les signaux appropriés via les fils de ligne L1 et L2 aux bornes desquels il est relié lorsqu'une liaison est établie.

L'équipement 2, traditionnellement appelé circuit de sonnerie, est relié aux fils de ligne L1 et L2 en amont des autres organes du poste et notamment du dispositif de prise 6 qui isole de la ligne les organes du poste qui ne font pas partie de l'équipement 2, lorsqu'une liaison n'est pas établie ou en cours d'établissement à partir du poste. Pour mémoire on a figuré un contact repos re2 d'un relais RE qui est activé dès l'établissement d'une liaison de manière à isoler l'équipement 2 en cours de communication et à permettre le fonctionnement de cet équipement 2 dès que le contact re2 est fermé par la retombée du relais RE lorsque le poste n'est pas en communication. De même on a figuré pour mémoire un usuel composant de protection 7 entre les fils de ligne, étant entendu que l'équipement 2 peut être soit une sonnerie électro-acoustique usuelle associée à des diodes anti-tintement, soit un montage électronique actionnant par exemple le haut-parleur du poste. L'équipement 3, du type cadran ou préférablement clavier, est relié au microprocesseur 5 via un circuit d'interface non figuré qui l'alimente et le surveille de manière à permettre à l'utilisateur d'introduire les données d'appel des postes demandés et les données d'exploitation du poste 1.

D'autres circuits auxiliaires assistent le microprocesseur 5 tant dans son fonctionnement propre, tel un agencement de mémoire 8, que dans l'application qu'il gère tel un agencement de signalisation 9, décimal ou multifréquence, pour les mises en communication avec le central de rattachement du poste 1.

Un dispositif d'alimentation 10 permet d'alimenter les organes qui consomment de l'énergie dans le poste 1 via un réseau d'alimentation sumbolisé par les fils VA et M respectivement reliés aux bornes + et − d'un pont de diodes 11 qui fixe le sens de circulation du courant continu d'alimentation du poste quelles que soient les polarités respectives des fils de ligne L1 et L2 qui l'alimente. Le pont à diodes 11 alimente un circuit de régulation 12 qui adapte la tension continue fournie par le pont aux besoins des organes alimentés et qui régule la distribution d'énergie en fonction des charges et des priorités.

l'établissement d'une communication par un utilisateur d'un poste tel que 1, s'effectue par l'intermédiaire du dispositif de prise 6, soit par décrochage du combiné, ici non figuré, soit par appui d'une touche de prise T le combiné restant accroché.

Le décrochage du combiné actionne les contacts cc1 et cc2 du crochet commutateur. Il ferme la boucle d'alimentation formée depuis le central de rattachement du poste par les fils L1 et L2, ce qui entraîne l'activation du microprocesseur par un circuit de démarrage 13 à partir du moment où le respect des impératifs d'alimentation à été vérifié par un circut de contrôle d'alimentation 14.

La fermeture du contact cc2 est ici exploitée pour signaler au microprocesseur 5, via les fils 1cc, que le combiné est décroché.

L'enfoncement de la touche T, combiné accroché, entraîne également l'alimentation du poste par la ligne, dans la mesure où l'un des contacts t1, de type travail, de cette touche est monté en parallèle au contact cc1 du crochet commutateur sur la ligne.

L'alimentation du poste entraîne l'activation du microprocesseur par le circuit de démarrage 13 dès que le respect des impératifs d'alimentation a été vérifié par le circuit de contrôle d'alimentation 14.

Le microprocesseur 5 assure alors la commande d'un relais de prise de ligne RE du dispositif 6, dont un contact re1, de type travail, est en parallèle avec le contact cc1 du crochet commutateur et du contact t1 de touche T. Préférablement le relais RE est de type miniature et bistable afin d'être compatible avec les circuits électroniques du poste. La fermeture du contact re1 assure la continuité de la boucle via les fils L1, L2 et permet le relâchement de la touche T. Un contact non figuré du relais RE permet de signaler l'état du relais au microprocesseur 5 afin de signaler à l'utilisateur la prise de ligne, afin que la touche T puisse être relâchée. Cette signalisation peut s'effectuer de diverses manières, notamment par l'intermédiaire du haut-parleur éventuel ou de la visualisation éventuelle.

A partir du moment où la boucle comprenant les fils de ligne L1 et L2 est fermée, bien que le combiné soit accroché, il est indispensable de pouvoir ouvrir la boucle en mettant au repos, en position ouverte, le contact re1.

Cette ouverture de boucle occasionne généralement une forte surintensité en raison de l'inductance de la ligne téléphonique et les risques de soudure des lames du contact re1 sont relativement grands si l'on choisit un relais adapté par ses performances et sa taille aux autres composants du poste.

En ce but le dispositif de prise de ligne 6 prévoit un organe de commutation et préférablement un transistor interrupteur de prise 15 qui est susceptible d'être placé en son état bloqué par le microprocesseur 5 pour couper la boucle d'alimentation du poste 1 en fin de communication.

Ce transistor interrupteur de prise 15 est interposé en extrémité du fil commun de retour M du réseau d'alimentation avant la borne négative C du pont de diodes 11 et après les bornes négatives des divers circuits du poste, de manière à isoler ceux-ci de cette borne négative C lorsqu'il est dans son état bloqué.

Dans la mesure où le blocage du transistor interrupteur de prise 15 coupe l'alimentation des circuits du poste et notamment de la logique comprenant le microprocesseur 5, il est prévu une alimentation auxiliaire au moins temporaire, pour assurer la mise au repos du relais bistable RE après coupure du courant d'alimentation, de manière à assurer l'ouverture du contact re1.

Cette alimentation auxiliaire est préférablement assurée par des condensateurs réservoirs non représentés qui sont connectés entre les bornes d'alimentation des circuits concernés et notamment du microprocesseur.

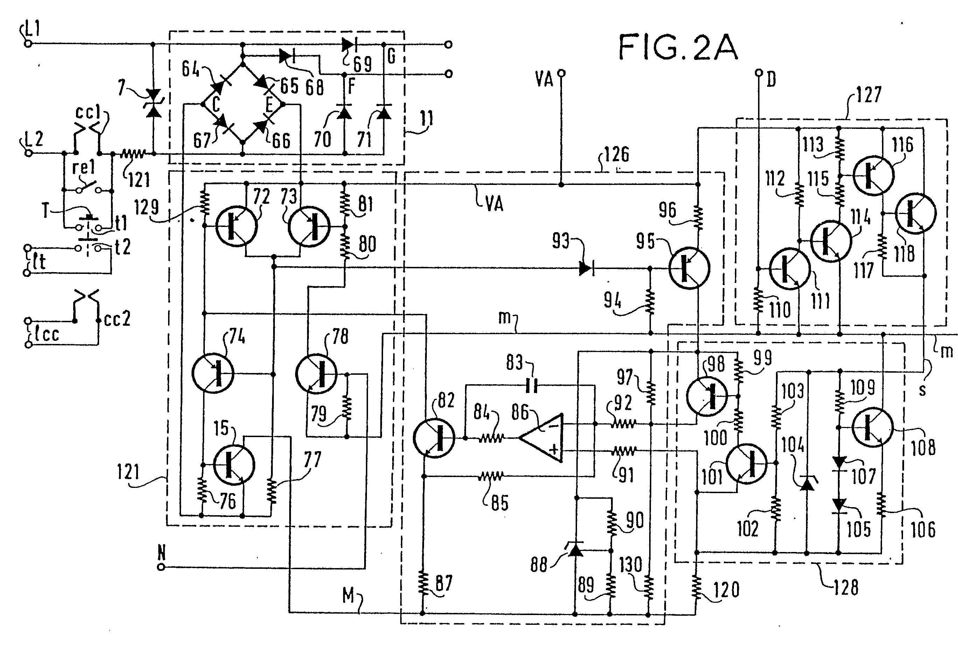

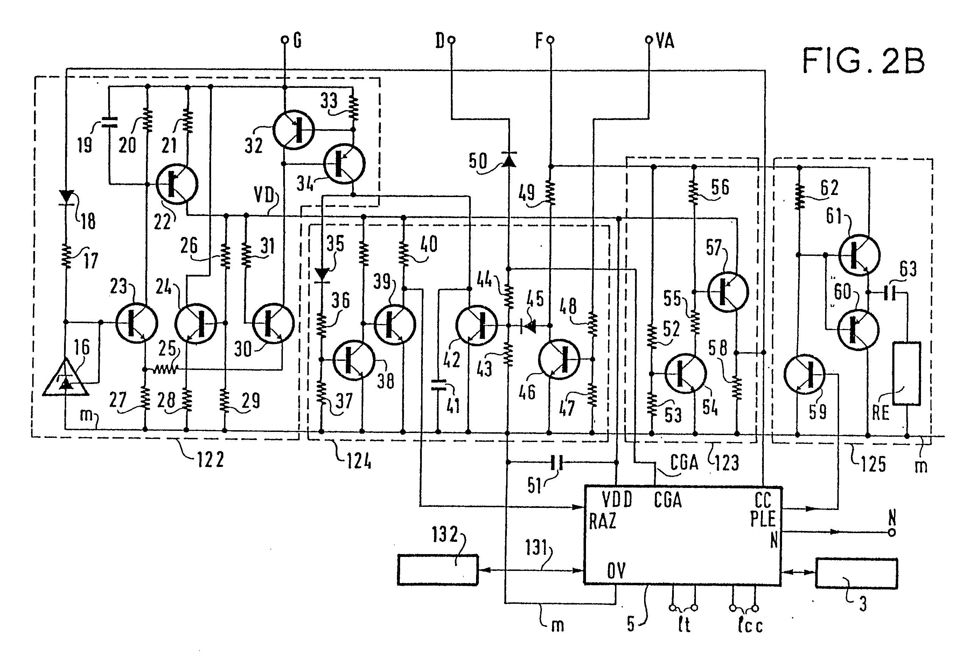

Les figures 2A et 2B montrent un exemple de réalisation des divers éléments du dispositif de prise et des circuits des postes associés à son fonctionnement.

On y retrouve notamment les fils de ligne L1, L2, les contacts cc1, cc2 du crochet commutateur, re1 du relais RE, t1 et t2 de la touche T en figure 2A ainsi que le pont de diodes 11.

Dans l'exemple de réalisation présenté le pont de diodes 11 relié aux fils de ligne par ses bornes A et B comporte trois branches d'alimentation et une unique branche de retour respectivement répertoriées par les bornes E, F, G et C et obtenues par interconnexion de huit diodes 64 à 71.

Les bornes d'alimentation E, F, G portées au même potentiel positif se partagent l'alimentation des différents organes en fonction de leurs rôles respectifs de manière à permettre une séparation et un fonctionnement sélectif si nécessaire.

Le microprocesseur 5 est alimenté à partir de la borne G via un circuit de régulation d'alimentation 122 du dispositif d'alimentation 10.

Le circuit de régulation 122 est relié à la borne positive G ainsi qu'à la borne négative C du pont via le transistor interrupteur de prise 15 un circuit comprenant les fils M et m.

Le circuit de régulation 122 est commandé, d'une part par un circuit de mesure de tension de ligne 123 et d'autre part de manière interne par un régulateur 16 dont la sortie est bouclée sur l'entrée de commande.

Un circuit de démarrage 124 assure la mise en fonctionnement du microprocesseur 5 à partir du moment où la tension d'alimentation est convenable, ainsi qu'il est déterminé à partir de la tension aux bornes du condensateur 51.

A partir du moment où une tension suffisante est appliquée au circuit de contrôle de tension de ligne 123 inséré entre la borne F positive du pont et le fil m, une indication de courant de ligne CC est fournie à une entrée d'interruption du microprocesseur 5 par le montage associant les transistors 54 et 57, l'un NPN, l'autre PNP convenablement agencés au moyens des résistances 52, 53, 55, 56, 58.

Simultanément le circuit de régulation 122 reçoit l'indication de courant de ligne CC via la diode 18 et la résistance 17 et cette indication commande la base du transistor 23 auquel elle est appliquée, ce dernier commande le transistor 22 via sa base reliée au point G, via un ensemble résistance 20—capacité 19, le fil VD reçoit un courant du point G via la faible résistance 21 et le transistor PNP 22. Ce courant traverse la résistance 31 et contrôle le transistor 30 et le circuit Darlington composé des transistors 32, 34.

Le transistor NPN 24, dont la base est connectée d'une part au fil VD d'alimentation et d'autre part au fil m de faible potentiel via les résistances 26 et 29 et dont les extrémités de la jonction émetteur-collecteur sont reliées d'une part au fil m via une résistance 28 et d'autre part au point G, conduit plus ou moins en fonction de la différence de potentiel entre fils VD et m, c'est à dire en fonction de la tension d'alimentation du microprocesseur 5, il agit ainsi en régulateur en liaison avec les autres éléments du circuit 122.

Ainsi qu'il a été énoncé plus haut un condensateur 51, insérée entre les fils m et VD qui alimentent le microprocesseur 5, permet de pallier les éventuelles coupures fugitives d'alimentation par exemple, en cas de numérotation décimale qui implique de nécessaires ruptures de boucle, sa capacité est par exemple de l'ordre de 220 microfarads.

Le circuit de démarrage 124 est nécessité par le fait que le microproccesseur 5 n'est pas alimenté en période de repos du poste qui le comporte.

Le circuit de démarrage 124 fournit un signal de remise à zéro RAZ déclenché par la conduction du transistor 34 du circuit de régulation. Le signal RAZ est transmis via le transistor NPN 39, lorsque le transistor NPN 38 qui contrôle la base de ce transistor 39 est bloqué, en l'absence de courant provenant du transistor 34 du circuit de régulation 122.

Ainsi qu'il a été dit plus haut, le démarrage n'est possible qu'à partir du moment où la charge du condensateur 41, en parallèle sur l'ensemble diode 35—résistances 36, 37, est suffisamment élevée. Un transistor NPN 42 ayant les extrémités de sa jonction collecteur-émetteur aux bornes du condensateur 41 permet de le décharger.

Le base de ce transistor 42 est reliée à la borne positive F du pont via une diode 45 de manière à décharger le condensateur 41 à chaque nouvelle mise en liaison du poste au central de rattachement.

Un transistor NPN 46 permet de court-circuiter la base du transistor 42 via la diode 45 à partir du moment où la borne F du pont est alimentée. Un fil CGA, relié à la base du transistor 42 en aval de la diode 45 et commandé par le microprocesseur 5, permet de commander la cessation de la demande de remise à zéro RAZ.

Après enfoncement de la touche T de prise de ligne le relais RE est mis au travail via un circuit de commande de relais 125 par le microprocesseur 5 convenablement alimenté et remis en position de début d'opération. En ce but un signal PLE est appliqué à la base d'un transistor NPN 59 inséré entre la borne F et le fil de faible potentiel m via une résistance 62 qui polarise la base de deux transistors complémentaires 61 et 60. Les transistors sont connectés de manière que l'émetteur du transistor NPN 61 soit reliée à une borne de la bobine du relais bistable RE via une capacité réservoir 63 et à l'émetteur du transistor PNP 60 qui a son collecteur relié à une seconde borne de la bobine du relais RE.

La conduction du transistor 59 sous la commande PLE du microprocesseur 5 conditionne le blocage du transistor 60 et la conduction du transistor 61 et par conséquent les décharges et charges de la capacité réservoir 63 qui créent les impulsions de commande du relais RE.

Les divers circuits de la figure 2A qui sont alimentés par le pont à diodes sont un circuit de régulation du courant de ligne 126 et son circuit de contrôle 127 et un circuit d'adaptation de gabarit au décrochage 128, en plus du circuit d'interruption 121.

En effet dans l'exemple de réalisation présente le transistor interrupteur de prise 15 est également mis en oeuvre pour la régulation du courant de ligne et pour la transmission des signaux de numérotation.

En ce but, le transistor 15 de type NPN est relié par son émetteur à la borne négative C du pont de diodes 11 et par son collecteur au fil M qui sert d'une part de fil de plus faible poentiel au circuit de régulation de courant de ligne 126 et qui est relié au fil m via une faible résistance 120, une résistance légèrement plus élevée 106 et la jonction émetteur-collecteur d'un transistor NPN 108, les deux résistances 120 et 106 étant par exemple de trois et douze ohms respectivement. La base du transistor interrupteur de prise 15, reliée à la borne négative C du pont via une résistance 76, est alimentée via la jonction émetteur-collecteur d'un transistor PNP 74.

Un transistor NPN 78 assure la transmission des ordres de blocage du transistor interrupteur de prise 15 qu'il reçoit sur sa base du microprocesseur 5 via le fil N. Ce transistor 78 est relié d'une part à la borne positive E du pont de diodes 11 via des résistances 80 et 81 de polarisation de la base d'un transistor PNP 73 monté en parallèle avec un transistor PNP 72 entre la borne positive E et la borne négative C du pont via une résistance élevée 77 assurant la polarisation de la base d'un transistor PNP 74 dont la jonction émetteur-collecteur relie les bases des transistors 72 et 15.

Dès l'apparition d'une tension positive en E et en l'absence d'application d'une tension positive N par le microprocesseur 5 sur la base du transistor 78, le transistor 15 est rendu conducteur par conduction du transistor 74. En, cas de numérotation décimale, d'interruption calibrée ou de fin de communication le microprocesseur 5 commande la conduction du transistor 78 qui entraine celle du transistor 73 qui court-circuite la jonction émetteur-collecteur du transistor 72 et bloque les transistors 74 et 15. En cas de numérotation décimale ou d'interruption calibrée l'alimentation nécessaire est maintenue par décharge de condensateurs tels que 51 (figure 2B) pour le microprocesseur 5 ou par une alimentation auxiliaire, notamment si une telle alimentation est prévue pour par exemple une visualisation.

En cas de fin de communication après rupture de la boucle par le transistor 15, le microprocesseur 5 envoie un signal de commande sur le fil PLE ce qui entraine le changement d'état du relais RE dont le contact re1 s'ouvre sans risque puisqu'il n'est plus sous tension.

Le transistor d'interruption de prise de ligne 15 est également utilisé en régulation de courant de ligne dans cet exemple de réalisation. En ce but l'émetteur du transistor 74 est relié au collecteur d'un transistor NPN 82 en sortie du circuit de régulation de courant de ligne 126, dont l'émetteur est relié au fil M via une résistance 87 peu élevée par exemple 180 ohms.

Le circuit régulateur 126 est classiquement agencé autour d'un amplificateur opérationnel 86 à contre-réaction, via une résistance 85 et une capacité stabilisatrice 83, cet amplificateur ayant son entrée positive reliée au fil M via une résistance 91 et la résistance 120 et son entrée négative contrôlée par un montage régulateur à diode 88 commandée en tension via un diviseur à résistances 89, 90 inséré entre ces bornes, et deux résistances 97, 92. Le montage régulateur à diode 88 est non seulement connecté aux bornes du diviseur à résistances 97, 130 qui alimente la résistance 92 par son point commun, mais aussi aux bornes de la jonction émetteur-collecteur d'un transistor PNP 98 dont la base est reliée au point commun d'un diviseur à résistances 99, 98 contrôlé d'une part par un transistor PNP 95 du circuit de contrôle 127 et d'autre part par un transistor NPN 101 du circuit d'adaptation de gabarit 128.

La base du transistor 95 est commandée de manière identique à celle du transistor 74 du circuit 121 via une diode 93, ce transistor alimente notamment le circuit 126.

Le circuit 127 assure classiquement une amplification au moyen d'un montage Darlington, de manière à alimenter le circuit 128 à partir du moment ou un signal de décrochage CGA est émis par le microprocesseur 5 via le fil CGA, la diode 50 et le fil D. Ce circuit 127 est composé des transistors NPN 110, 114, 118 et du transistor 118 classiquement insérés entre le fil VA qu'alimente la borne positive E du pont de diodes 11, le fil M pour les transistors 110, 114 et un fil s pour les transistors 116 et 118, via des résistances 110, 112, 113, 115, 117.

Le courant fourni sur le fil s au circuit 128 part le transistor 118 est appliqué à l'anode d'une diode Zener 104 dont la cathode est reliée au fil M via la très faible résistance 120. Un diviseur à résistances 102, 103 est placé aux bornes de la diode Zener 104 de manière que son point commun contrôle la base du transistor NPN 101 dont la jonction collecteur-émetteur relie la base du transistor 98 au fil M via d'une part la résistance 100 et d'autre part la résistance 120.

La diode Zener 104 contrôle le potentiel de la base d'un transistor NPN 108 qui assure la mise en liaison du fil de faible potentiel m avec le fil M via les deux faibles résistances 120 et 106. En ce but la base du transistor 108 est reliée à l'anode de la diode Zener 104 via une résistance 109 et au fil M via la résistance 120 et deux diodes 105 et 107.

La conduction du transistor 118 entraîne celle du transistor 108 qui assure une quasi-mise à la masse des circuits reliés au fil m en raison des faibles valeurs des résistances 106 et 120. Le diviseur à résistances 102, 103 permet de conserver constant le courant de base du transistor 101 du régulateur de courant de ligne 126, avec un montage flottant.

On notera également que le dispositif de prise selon l'invention permet de commander la prise de ligne à partir d'un appareil informatique quelconque 132 relié au microprocesseur 5 par exemple par la liaison bidirectionnelle 131 à partir du moment ou une alimentation supplémentaire, non figurée, permet de maintenir le microprocesseur 5 en fonction.

Dans un exemple de réalisation cette alimentation supplémentaire est reliée d'une part à la borne G et de l'autre au fil m, et elle est fournie par l'appareil informatique 132 ou par une source qu'il contrôle.

A partir du moment ou la touche T a été enfoncée et où le relais RE a été mis dans son état stable de travail pour lequel le contact re1 est fermé, il est possible de commander la prise de ligne par fermeture de boucle, au gré de l'appareil informatique 132, en commandant au microprocesseur 5 la mise en conduction du transistor interrupteur 15 préalablement bloqué.

**Revendications**

1. Dispositif de prise de ligne téléphonique par fermeture de boucle sans décrochage du combiné, hors du crochet commutateur, pour poste téléphonique comportant un microprocesseur (5) associé à une pluralité de circuits électroniques auxiliaires et alimenté en courant continu, ainsi que ces circuits, par l'intermédiaire de la ligne téléphonique, via un pont de diodes (11) fixant le sens de circulation du courant continu dans le poste quelle que soit la polarité des fils de ligne téléphonique (L1, L2), et via un réseau d'alimentation (VD, M) situé en aval du pont de diodes par rapport à la ligne téléphonique, ledit microprocesseur commandant un relais (RE) pour assurer la prise de ligne par fermeture de boucle suite à l'actionnement d'une touche de prise (T), ledit dispositif étant caractérisé en ce qu'il comporte un transistor interrupteur (15), commandé par le microprocesseur (5) et interposé en extrémité d'un fil commun de retour (M) du réseau d'alimentation, pour protéger en contact (re1) du relais (RE) lors des ouvertures de boucle, contact qui est placé en parallèle avec un contact (t1) de la touche (T) et un contact (cc1) du crochet commutateur sur un fil de ligne en amont du pont de diodes (11), ledit transistor (15) interrompant la boucle reliant les fils de ligne (L1, L2), via le réseau d'alimentation à travers le poste, préalablement à toute ouverture du contact (re1) du relais.

2. Dispositif de prise de ligne selon la revendication 1, caractérisé en ce que le relais (RE) est de type bistable de manière à permettre une commande de prise de ligne par mise en conduction du transistor interrupteur (15) par le microprocesseur (5) en fonction du besoin d'un appareil informatique (132) relié à ce microprocesseur.

3. Dispositif de prise de ligne selon la revendication 2, caractérisé en ce que le relais bistable est commandé par le microprocesseur par l'intermédiaire d'une capacité réservoir (63) dont les charges et décharges sont contrôlées, via leurs bases communes, par un montage de deux transistors complémentaires (60, 61) à émetteurs communs reliés à une borne de la capacité réservoir.

4. Dispositif de prise de ligne selon la revendication 1, caractérisé en ce qu'il comporte un circuit de démarrage (124) fournissant un signal de remise à zéro au microprocesseur après prise de ligne dès que la charge aux bornes d'un condensateur (41) indique que la tension d'alimentation fournie au microprocesseur par un circuit de régulation (122) alimenté par le pont de diodes (11) a atteint le seul requis.

5. Dispositif de prise de ligne selon la revendication 1, caractérisé en ce qu'il comporte au moins un condensateur (51) en parallèle sur les bornes d'alimentation du microprocesseur (5) pour maintenir cette alimentation pendant les coupures limitées de boucle par le transistor interrupteur (15).

6. Dispositif de prise de ligne selon la revendication 2 pour poste comportant une alimentation supplémentaire en plus de l'alimentation par les fils de ligne, caractérisé en ce qu'il comporte un circuit de contrôle (123) de la tension d'alimentation fournie par la ligne, via le pont de diodes (11), ledit circuit étant relié par sa sortie à une entree d'interruption du microprocesseur (5) qui reçoit également des signaux de contrôle d'état, via un contact (t1) de touche T et un contact (cc2) de crochet commutateur.

**Patentansprüche**

1. Anordnung zur Belegung einer Fernsprechleitung durch Schließen der Schleife ohne Abheben des Hörers von der Schaltgabel, für ein Fernsprechgerät mit einem Mikroprozessor (5) und zahlreichen ihm zugeordneten elektronischen Hilfskreisen, wobei der Mikroprozessor und die Hilfskreise über die Fernsprechleitung, über eine Diodenbrücke (11), die die Gleichstromrichtung im Gerät unabhängig von der Polarität der Fernsprech-Leitungsdrähte (L1, L2) festlegt, und über ein der Diodenbrücke bezüglich der Fernsprechleitung nachgeschaltetes Stromversorgungsnetz (VD, M) mit Gleichstrom versorgt werden und der Mikroprozessor ein Relais (RE) steuert, um die Leitungsbelegung durch Schließen der Schleife aufgrund der Betätigung einer Taste (T) zu bewirken, dadurch gekennzeichnet, daß sie einen Schalttransistor (15) aufweist, der vom Mikroprozessor (5) gesteuert wird und am Ende eines gemeinsamen Rückleitungsdrahts (M) des Stromversorgungsnetzes eingefügt ist, um einen Kontakt (re1) des Relais (RE) während des Öffnens der Schleife zu schützen, der parallel zu einem Kontakt (t1) der Taste (T) und einem Kontakt (cc1) der Schaltgabel in einem der Leitungsdrähte vor der Diodenbrücke (11) angeordnet ist, wobei der Transistor (15) die die Leitungsdrähte (L1, L2) verbindende Schleife über das Stromversorgungsnetz durch das Gerät vor jeglichem Öffnen des Kontakts (re1) des Relais öffnet.

2. Anordnung zur Leitungsbelegung nach Anspruch 1, dadurch gekennzeichnet, daß das Relais (RE) ein bistabiles Relais ist, so daß es eine Steuerung der Leitungsbelegung ermöglicht, indem der Schalttransistor (15) durch den Mikroprozessor (5) in Abhängigkeit von den Bedürfnisses eines an den Mikroprozessor angeschlossenen Datenverarbeitungsgeräts (132) leitend gesteuert wird.

3. Anordnung zur Leitungsbelegung nach Anspruch 2, dadurch gekennzeichnet, daß das bistabile Relais vom Mikroprozessor über einen Speicherkondensator (63) gesteuert wird, dessen Lade- und Entladevorgänge von einer Schaltung mit zwei komplementären Transistoren (60, 61) über deren gemeinsame Basiselektroden gesteuert werden, wobei die Emitter dieser Transistoren gemeinsam mit einem Anschluß Speicherkondensators verbunden sind.

4. Anordnung zur Leitungsbelegung nach Anspruch 1, dadurch gekennzeichnet, daß sie einen Startschaltkreis (124) aufweist, der ein Nullsetzungssignal nach der Leitungsbelegung an den Mikroprozessor liefert, sobald die Ladung an den Klemmen eines Kondensators (41) anzeigt, daß die dem Mikroprozessor von einem über die Diodenbrücke (11) versorgten Regelungsschaltkreis (122) gelieferte Versorgungsspannung den geforderten Schwellwert erreicht hat.

5. Anordnung zur Leitungsbelegung nach Anspruch 1, dadurch gekennzeichnet, daß sie mindestens einen Kondensator (51) aufweist, der parallel zu den Stromversorgungsklemmen des Mikroprozessors (5) liegt und diese Stromversorgung während der begrenzten Schleifenunterbrechungen durch den Schalttransistor (15) aufrechtzuerhalten.

6. Anordnung zur Leitungsbelegung nach Anspruch 2 für ein Gerät, das neben der Stromversorgung über die Leitungsdrähte eine zusätzliche Stromversorgung besitzt, dadurch gekennzeichnet, daß sie einen Schaltkreis (123) zur Kontrolle der über die Leitung und die Diodenbrücke (11) gelieferte Versorgungsspannung besitzt, dessen Ausgang mit einem Unterbrechungseingang des Mikroprozessors (5) verbunden ist, wobei der Mikroprozessor außerdem Zustandskontrollsignale über einen Kontakt (t1) der Taste T und einen Kontakt (cc2) der Schaltgabel zugeführt erhält.

**Claims**

1. A device for seizing a telephone line by closing the loop without lifting the handset from the switch hook, for a telephone set comprising a microprocessor (5) and a plurality of auxiliary electronic circuits, the microprocessor and the circuits being supplied with DC power from the telephone line at a predetermined polarity regardless of the polarity of the wires of the telephone line (L1, L2) and via a supply network (VD, M) situated downstream of the diode bridge with respect to the telephone line, said microprocessor controlling a relay (RE) for ensuring the seizing of the line by closing the loop as soon as a seize key (T) has been actuated, characterized in that it comprises a switch transistor (15) controlled by the microprocessor (5) and located at the end of a common return wire (M) of the power supply network, for protecting a contact (re1) of the relay (RE) during the opening of the loop, this contact being placed parallelly to the contact (t1) of the key (T) and a contact (cc1) of the switch hook in a wire of the line upstream of the diode bridge (11), said transistor (15) breaking the loop which connects the wires of the line (L1, L2), via the power supply network through the telephone set prior to any opening of the contact (re1) of the relay.

2. A device for seizing a line according to claim 1, characterized in that the relay (RE) is a bistable relay which allows the microprocessor (5) to control the seizing of the line by rendering the switch transistor (15) conductor in accordance with the necessities of a data processing device (132) connected to this microprocessor.

3. A device for seizing a line according to claim 2, characterized in that the bistable relay is controlled by the microprocessor through a charge capacitor (63), the charge and discharge operations of which are controlled by a circuit including two complementary transistors (60, 61) via their interconnected basis electrodes, the emitter electrodes of these transistors being connected in common to a terminal of the charge capacitor.

4. A device for seizing a line according to claim 1, characterized in that it comprises a start circuit (124) delivering a return-to-zero signal to the microprocessor after the seizing of a line, as soon as the charge at the terminals of a capacitor (41) indicates that the supply voltage furnished to the microprocessor by a regulation circuit (122) which is power-supplied through the diode bridge (11) has reached the required threshold.

5. A device for seizing a line according to claim 1, characterized in that it comprises at least one capacitor (51) which is branched in parallel to the power supply terminals of the microprocessor (5) in order to maintain this supply during the limited periods of loop interruptions initiated by the switch transistor (15).

6. A device for seizing a line according to claim 2 for a telephone set including an additional power supply besides the supply through the wires of the line, characterized in that it comprises a circuit (123) for controlling the supply voltage furnished by the line via the diode bridge (11), the output of this circuit being connected to an interrupt input of the microprocessor (5) which further receives state control signals via a contact (t1) of the key T and a contact (cc2) of the switch hook.

# FIG.1

0 091 630

FIG.2A

FIG. 2B

0 091 630